# EUROPÄISCHE PATENTSCHRIFT

(11) **EP 1 606 162 B1**
(45) Veröffentlichungstag und Bekanntmachung des Hinweises auf die Patenterteilung: **13.06.2007**
(21) Anmeldenummer: 03789273.4
(22) Anmeldetag: 13.12.2003
(51) Int. Cl.: B64C 27/33

(54) **DRILLELEMENT FÜR EINEN LAGERLOSEN ROTOR**
DRILLING ELEMENT FOR A BEARINGLESS ROTOR
ELEMENT DE TORSION POUR UN ROTOR SANS PALIER

(30) Priorität: 27.03.2003 DE 10313982
(43) Veröffentlichungstag der Anmeldung: 21.12.2005
(73) Patentinhaber: EUROCOPTER DEUTSCHLAND GmbH, 86609 Donauwörth (DE)
(72) Erfinder: DENECKE, Ulrich, 85579 Neubiberg (DE); KUNTZE-FECHNER, Gerald, 83666 Waakirchen (DE); BANSEMIR, Horst, 81825 München (DE); EMMERLING, Stefan, 85579 Neubiberg (DE)
(74) Vertreter: Duschek, Horst Jürgen
(86) Internationale Anmeldenummer: PCT/EP2003/014215
(87) Internationale Veröffentlichungsnummer: WO 2004/085248

(56) Entgegenhaltungen:
- FR-A- 2 608 554
- US-A- 4 650 401
- US-A- 5 358 381

## Beschreibung

### TECHNISCHES GEBIET

Die vorliegende Erfindung betrifft ein Drillelement für einen lagerlosen Rotor. Ferner betrifft die Erfindung einen lagerlosen Rotor mit einem solchen Drillelement sowie ein Drehflügelflugzeug, insbesondere ein Hubschrauber, mit einem solchen Rotor.

### STAND DER TECHNIK

Aus der EP 0 323 857 B1 ist eine an einem Rotormast anzubringende Biegeplatte bekannt, umfassend einen Rotormast-Befestigungsabschnitt, einen an einem freien Ende der Biegeplatte angeordneten Rotorblatt-Befestigungsabschnitt in Form von zwei Buchsen sowie einen zwischen dem Rotormast-Befestigungsabschnitt und dem Rotorblatt-Befestigungsabschnitt befindlichen schwenkweichen und torsionsweichen Zwischenbereich, der ein Drillelement bildet. Das Drillelement besitzt einen annähernd H-förmigen Querschnitt, der aus einen mittleren, streifenförmigen Element und zwei dazu seitlich angeordneten Elementen gebildet ist, die jeweils eine Querschnittsform in der Gestalt eines liegenden Y besitzen. Die Schenkel des Y-förmigen Querschnittsbereichs sind stark abgespreizt. Der H-förmige Querschnitt bzw. seine zusammengesetzten Einzelelemente weisen eine im Wesentlichen konstante Materialdicke auf. Die Biegeplatte ist weitgehend aus Faserverbundwerkstoff hergestellt. Aufgrund der H-förmigen Querschnittsgestaltung sowie der starken Abspreizung der Schenkel des Y-förmigen Querschnittsbereichs kann es bei einer Torsion des Drillelementes zu einer ungünstigen Verwölbung des Querschnittsprofils kommen.

Aus der US-P-5 358 381 , welche als nächstliegender Stand der Technik betrachtet wird, ist ein an einem Rotormast anzubringendes Joch bekannt, umfassend einen Rotormast-Befestigungsabschnitt, einen sich daran anschließenden plattenförmigen schlagweichen Bereich, einen an einem freien Ende des Jochs angeordneten Rotorblatt-Befestigungsabschnitt in Form von zwei Buchsen sowie einen zwischen dem schlagweichen Bereich und dem Rotorblatt-Befestigungsabschnitt befindlichen schwenk- und torsionsweichen Zwischenbereich, der ein Drillelement bildet. Das Drillelement besitzt einen sternförmigen Querschnitt mit sechs Stegen oder Armen (dort als "flanges" bezeichnet). Die Stege, die eine im wesentlichen konstante Materialdicke besitzen, sind relativ zueinander stark abgespreizt angeordnet. Drillelement und Joch sind weitgehend aus Faserverbundwerkstoff hergestellt. Die einzelnen Stege besitzen eine Außenlage aus einem Fasergewebe. Aufgrund der erläuterten Querschnittsgestaltung sowie der starken Abspreizung der Stege bzw. Arme kann es bei einer Torsion des Drillelementes zu einer ungünstigen Verwölbung des Querschnittsprofils kommen.

Die DE-OS-2917301 offenbart einen lagerlosen Rotor mit einem schlag-, schwenk- und torsionsweichen Strukturelement. Die Torsionsweichheit verleiht dem Strukturelement neben den schlag- und schwenkweichen Eigenschaften die Eigenschaft eines Drillelementes. Dieses Drillelement besitzt eine im wesentlichen T-förmige oder kreuzförmige Querschnittsgestalt. Die einzelnen Stege bzw. Arme des T-förmigen oder kreuzförmigen Querschnitts, die eine im wesentlichen konstante Dicke besitzen, sind geschlitzt ausgebildet.

Für bestimmte Anwendungen, wie z.B. Kipprotoren für ein als Kipprotorhubschrauber ausgestaltetes Drehflügelflugzeug, ist es erforderlich, den Anschluss eines Rotorblattes möglichst schwenksteif auszugestalten. Aufgrund der am Rotor auftretenden hohen Belastungen ist hierbei eine hohe Festigkeit des Drillelementes erforderlich. Würden man für einen solchen Einsatzzweck die konventionellen Drillelemente in unveränderter Form verwenden, so würde dies zu einer zu schwenkweichen Anbindung eines Rotorblattes an einem Rotorkopf führen. Ferner wäre die Festigkeit des Drillelementes nicht mehr hinreichend gewährleistet. Falls man hingegen die vorbekannten Drillelemente hinreichend schwenksteif und stabil ausgestaltete, so wären die Drillelemente aufgrund der daraus resultierenden, zu hohen Torsions- bzw. Drillsteifigkeit nicht mehr genügend verdrehbar, was sich insbesondere auf die Steuerbarkeit eines mit einem solchen Drillelement ausgestatteten Rotors nachteilig auswirken kann. Darüber hinaus besäßen solche Drill elemente ein recht hohes Gewicht und einen sehr großen Gesamtquerschnitt, was sowohl aus aerodynamischem Gründen als auch im Hinblick auf ein möglichst geringes Leergewicht eines Drehflügelflugzeugs nicht erstrebenswert ist. Schließlich sind die vorbekannten Drillelemente auch sehr lang, was aus aerodynamischer Sicht nachteilig ist, da der Gesamtluftwiderstand des Drillelementes recht hoch ist und darüber hinaus ein relativ großer Bereich eines Rotorradius nicht für einen aerodynamisch wirksamen Bereich eines Rotorblattes genutzt werden kann.

### DARSTELLUNG DER ERFINDUNG

Aufgabe der Erfindung ist es, ein kompaktes Drillelement mit einer hohen Schwenksteifigkeit bei geringer Torsions- bzw. Drillsteifigkeit und gleichzeitig hoher Torsions bzw. Drillfestigkeit zu schaffen. Ferner soll ein lagerloser Rotor und ein Drehflügelflugzeug mit einem solchen Drillelement bereit gestellt werden.

Die vorhergenannte Aufgabe wird gemäß einem ersten Aspekt gelöst durch ein erfindungsgemäßes Drillelement mit den Merkmalen des Anspruchs 1.

Dieses Drillelement für einen lagerlosen Rotor, welches weitgehendst aus Faserverbundwerkstoff hergestellt ist, verfügt über eine im wesentlichen symmetrische, abgeflachte Drillrelement-Querschnittsform, weiche annähernd die Umrissform eines liegenden, mittigen Doppelkegelschnitts besitzt. Man kann auch sagen, die Umrissform besitzt eine Gestalt ähnlich einer "Fliege" oder einer liegenden Sanduhr, oder die Form von zwei schmalen, liegenden, im wesentlichen gleichschenkligen Dreiecken, die im Bereich ihren einander zugewandten Spitzen miteinander verbunden sind. Im weitesten Sinne könnte man die Umrissform auch noch als X-förmig bezeichnen, wobei jedoch die Bereiche zwischen zwei benachbarten Schenkeln des "X" weitestgehend durch Faserverbundwerkstoffmaterial ausgefüllt sind.

Das erfindungsgemäße Drillelement besitzt eine sehr hohe Schwenksteifigkeit bei gleichzeitig geringer Torsions- bzw. Drillsteifigkeit und einer hohen Torsions bzw. Drillfestigkeit. Es ist bei einer Verdrehung weitgehend verwölbungsfrei. Das erfindungsgemäße Drillelement weist gleichzeitig einen vergleichsweise kompakten Gesamtquerschnitt bei hoher Festigkeit auf. Das erfindungsgemäße Drillelement ist damit besonders für Kipprotoranwendungen geeignet. Weil das erfindungsgemäße Drillelement, wie zuvor erwähnt, sehr verdrehweich ist, kann es bei einem vorgegebenen Verdrehwinkelbereich auch erheblich kürzer ais vorbekannte Drillelemente ausgestaltet werden. Die Länge des erfindungsgemäßen Drillelementes ist bis auf ca. ein Drittel der Länge eines konventionellen, vorbekannten Drillelementes reduzierbar. Daraus resultieren in Verbindung mit dem kompakten Gesamtquerschnitt wiederum erhebliche aerodynamische Vorteile: im Rotorbetrieb wird der Gesamtluftwiderstand des Drillelementes reduziert, und die durch die mögliche Verkürzung des Drillelementes gewonnene Anteil einer Rotorradiuslänge kann für aerodynamisch wirksame Rotorblattbereiche eines Rotorblattes genutzt werden. Dies reduziert wiederum den Gesamtwiderstand des Rotors und erhöht dessen aerodynamische Güte.

Weitere bevorzugte und vorteilhafte Ausgestaltungsmerkmale des erfindungsgemäßen Drillelementes sind Gegenstand der Unteransprüche 2 bis 12.

Die oben genannte Aufgabe wird gemäß einem zweiten Aspekt gelöst durch einen lagerlosen Rotor mit den Merkmalen des Anspruchs 13. Darüber hinaus wird die oben genannte Aufgabe gemäß einem dritten Aspekt gelöst durch ein erfindungsgemäßes Drehflügelflugzeug mit den Merkmalen des Anspruchs 14.

Die mit dem erfindungsgemäßen lagerlosen Rotor und dem erfindungsgemäßen Drehflügelflugzeug erzielbaren Vorteile sind im wesentlichen die gleichen, wie Sie oben im Zusammenhang mit dem erfindungsgemäßen Drillelement erläutert wurden.

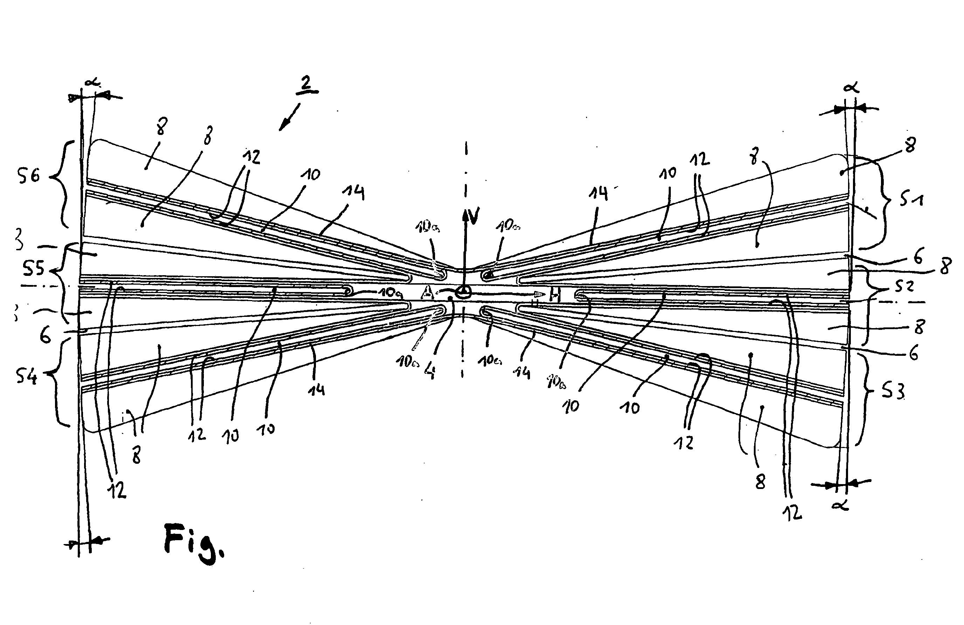

Ein bevorzugtes Ausführungsbeispiel der Erfindung mit zusätzlichen Ausgestaltungsdetails und weiteren Vorteilen ist nachfolgend unter Bezugnahme auf die beigefügte Zeichnung näher beschrieben und erläutert.

### KURZE BESCHREIBUNG DER ZEICHNUNG

Die **Figur** zeigt eine schematische Querschnittsdarstellung eines erfindungsgemäßen Drillelementes.

### DARSTELLUNG EINES BEVORZUGTEN AUSFÜHRUNGSBEISPIELS

In der Figur ist eine schematische Querschnittsdarstellung eines erfindungsgemäßen Drillelementes 2 für einen lagerlosen Rotor dargestellt. Das Drillelement 2 ist weitgehendst aus Faserverbundwerkstoff hergestellt. Wie in der Zeichnung deutlich erkennbar, besitzt es eine symmetrische, abgeflachte Drillelement-Querschnittsform, welche annähernd die Umrissform eines liegenden, mittigen Doppelkegelschnitts besitzt. Die horizontale Mittelachse des Drillelement-Querschnitts ist mit dem Bezugszeichen H und die vertikale Mittelachse mit dem Bezugszeichen V gekennzeichnet. Man kann auch sagen, der Umriss des Drillelement-Querschnitts besitzt annähernd die Gestalt von zwei relativ schmalen, liegenden, im wesentlichen gleichschenkligen Dreiecken, die symmetrisch zur horizontalen und vertikalen Mittelachse H, V ausgerichtet und im Bereich ihrer einander zugewandten Spitzen miteinander verbunden sind. Diese Umriss- oder Querschnittsform ist nahezu vollständig mit Faserverbundmaterial ausgefüllt, wie nachfolgend noch näher erläutert werden wird. Die Längsrichtung bzw. Längsachse des Drillelementes ist mit dem Bezugszeichen A angedeutet. Die Längsachse A verläuft vorzugsweise radial zum Rotorkreis des Rotors bzw. erstreckt sich im wesentlichen parallel zu der Längsrichtung eines Rotorblattes des Rotors.

Wie aus der Figur des weiteren hervorgeht, ist die zuvor beschriebene Drillelement-Querschnittsform durch zwei einander um die vertikale Mittelachse V spiegelsymmetrisch seitlich gegenüberliegende gleichartige Gruppen (s1 bis S3 und S4 bis S6) von Stegen S1 bis S6 gebildet. Die Stege S1 bis S6 besitzen einen gemeinsamen dünnen, abgeflachten Wurzelbereich 4, der sich in einem Bereich um die Längsachse A herum erstreckt und einen Mittenabschnitt der Drillelement-Querschnittsform darstellt. Die Stege S1 bis S6 münden in diesen Wurzelbereich 4 bzw. gehen von diesem aus.

Die Stege S1 bis S6 einer jeweiligen Gruppe (S1 bis S3 und S4 bis S6) sind auf jeder Seite der vertikalen Achse V durch schmale Zwischenspalte 6 voneinander getrennt übereinander angeordnet. Die Dicke der jeweiligen Stege S1 bis S6 nimmt ausgehend vom Wurzelbereich 4 nach außen zu den freien lateralen Seitenrändern des Drillelementes 2 hin zu. Die Stege S1 bis S6 besitzen eine sehr geringe Spreizung relativ zueinander. Die Stege S1 bis S6 selbst weisen jeweils eine keilförmige Querschnittsform in der Art eines liegenden oder geringfügig schräg gestellten schmalen Dreiecks auf, dessen Spitze in den Wurzelbereich 4 mündet.

Darüber hinaus weisen die Stege S1 bis S6 in diesem Ausführungsbeispiel nicht nur im Bereich der lateralen Seiten der Drillelement-Querschnittsform, sondern im wesentlichen über ihre nahezu gesamte keilförmige Querschnittsform hinweg unidirektionale, hoch dehnbare Verstärkungsfaserpakete 8 auf, die in eine geeignete Matrix, z.B. ein Epoxydharz, eingebettet sind und ebenfalls eine weitgehend keilförmige Querschnittsform mit einer nach außen hin zunehmenden Dicke besitzen. Die Fasern der unidirektionale Verstärkungsfaserpakete 8 verlaufen in Längsrichtung A des Drillelementes 2 und damit in Fliehkraftrichtung eines dem Drillelement 2 zugeordneten Rotorblattes (nicht gezeigt) des Rotors.

Die unidirektionalen Verstärkungsfaserpakete 8 erstrecken sich bis zur Außenkontur des Drillelement-Querschnittes. Anders als beim Stand der Technik sind die unidirektionalen Verstärkungsfaserpakete 8 an der Außenkontur des Drillelement-Querschnittes also nicht durch eine Fasergewebedeckschicht oder dergleichen, die über eine multidirektionale Faseranordnung verfügt, abgedeckt bzw. überlaminiert. Die Fasern der unidirektionalen Verstärkungsfaserpakete 8 sind vorzugsweise Kohlefasern. Je nach Anwendungsfall können die Verstärkungsfaserpakete 8 jedoch zusätzlich einem geringen Anteil anderer Faserarten enthalten oder sogar aus anderen Faserarten hergestellt sein.

Die Fasern der unidirektionalen Verstärkungsfaserpakete 8 liegen in den im Rotorbetrieb durch Schwenkbewegungen des Rotorblattes am stärksten gedehnten Querschnittsbereichen des Drillelementes 2 und können hier sehr hohe Belastungen aufnehmen. Die zuvor genannten Ausgestaltungsform des Drillelement-Querschnittes und insbesondere seiner Stege S1 bis S6 und unidirektionale Verstärkungsfaserpakete 8 stellt somit sicher, dass trotz einer vergleichsweise geringen Drillelement-Querschnittsbreite eine hohe Schwenksteifigkeit erzielbar ist.

Wie in der Zeichnung des weiteren dargestellt, sind die Stege S1 bis S6 in Längsrichtung des Drillelementes 2 jeweils geschlitzt ausgebildet. Pro Steg S1 bis S6 ist in diesem Ausführungsbeispiel ein Schlitz 10 vorgesehen. Grundsätzlich können im Drillelement-Querschnitt zusätzlich zu geschlitzten Stegen S1 bis S6 jedoch auch Stege vorhanden sein, die keine Schlitze aufweisen. Bei den gezeigten Stegen S1 bis S6 erstreckt sich der jeweilige Schlitz 10 ausgehend von einem freien lateralen Seitenrand der Drillelement-Querschnittsform in Richtung zu dem Wurzelbereich 4 und endet kurz vor diesem. Im vorliegenden Fall sind die Schlitze 10 der oberen und unteren Stege S1, S3 und S4, S6 gleich tief, während die Schlitze 10 der jeweils mittleren Stege S2 und S5 demgegenüber eine geringere Tiefe aufweisen. Die Schlitze 10 sind im wesentlichen geradlinig ausgebildet. Die jeweiligen Schlitzlängsachsen bzw. deren Verlängerungen überkreuzen sich vorzugsweise im Mittelpunkt (hier: Längsachse A) der Drillelement-Gesamtquerschnittsform, wie im gegebenen Ausführungsbeispiel, in unmittelbarer Nähe des Mittelpunktes durch den Wurzelbereich 4.

Der Schlitz 10 eines jeweiligen Steges S1 bis S6 verläuft zwischen (mindestens) zwei benachbarten unidirektionalen Verstärkungsfaserpakten 8. In unmittelbarer Nähe seines Schlitzes 10 weist ein jeweiliger Steg S1 bis S6 mindestens eine Verstärkungsfasergewebelage 12 auf, die ausgehend von einer lateralen Schlitzöffnung U-förmig oder schlaufenförmig um einen Schlitzboden 10a und die innerhalb des Steges S1 bis S6 befindliche Schlitzkontur herum verläuft. Auch diese U-förmige oder schlaufenförmige Verstärkungsfasergewebelage 12 befindet sich somit zwischen zwei benachbarten unidirektionalen Verstärkungsfaserpakten 8 und ist an diese angeklebt bzw. anlaminiert.

Wie aus der Figur überdies hervorgeht, sind jeweils zwei Stege S1, S6 und S3, S4, die sich an der Ober- und Unterseite der Drillelement-Querschnittsform paarweise gegenüberliegen, mit mindestens einer Verstärkungsfaserlage 14 ausgestattet, die sich über die Breite des jeweils einen Steges S1, S3 und über den Wurzelbereich 4 hinweg durchgehend zu dem jeweils anderen, gegenüberliegenden Steg S6, S4 und über dessen Breite erstreckt. Bei der Verstärkungsfaserlage 14 handelt es sich vorzugsweise um ein Fasergewebe. Aus der Zeichnung ist erkennbar, dass die jeweilige Verstärkungsfaserlage 14 (oben und unten) im Wurzelbereich 4 bis an die Außenkontur des Drillelement-Querschnitts reicht.

Die lateralen Seitenflächen der Stege S1 bis S6 sind oberhalb und unterhalb der horizontalen Mittelachse H zu der vertikalen Mittelachse V hin abgeschrägt bzw. um einen Winkel α geringfügig geneigt.

Je nach Anwendungsfall kann die Anzahl der Stege variieren und eine geringere oder höhere Anzahl als die oben beschriebenen sechs Stege S1 bis S6 annehmen.

Das erfindungsgemäße Drillelement 2 ist vorzugsweise integraler Bestandteil eines Rotorblattes, eines Rotorblatt-Verbindungselementes, eines Rotorblatt-Anschlusselementes oder eines Rotorkopfelementes (z.B. eine Rotorkopfplatte oder ein Rotorkopfjoch). Es kann jedoch auch als separates Bauteil ausgestaltet werden. Das Drillelement 2 kann an seinen Endbereichen Verbindungselemente zum Anschließen von angrenzenden Bauteilen (z.B. für ein Rotorblatt, falls das Drillelement als separates Bauteil oder als integrales Bauteil eines Rotorkopfelementes ausgestaltet ist) aufweisen.

Das erfindungsgemäße Drillelement 2 ist besonders als Komponente eines lagerlosen Rotors geeignet. Erfindungsgemäß ist ein Drehflügelflugzeug, insbesondere ein Hubschrauber, insbesondere ein Kipprotorhubschrauber, mit mindestens einem lagerlosen Rotor und mit mindestens einem solchen Drillelement 2 ausgestattet.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Drillelement
- 4: Wurzelbereich / Mittenabschnitt von 2
- 6: Zwischenspalte
- 8: Unidirektionale Verstärkungsfaserpakete
- 10: Schlitze
- 10a: Schlitzboden
- 12: U-förmige oder schlaufenförmige Verstärkungsfasergewebelagen
- 14: Durchgehende Verstärkungsgewebelagen

- S1: Steg
- S2: Steg
- S3: Steg
- S4: Steg
- S5: Steg
- S6: Steg

- α: Neigungswinkel / Abschrägung

## Patentansprüche

1. Drillelement (2) für einen lagerlosen Rotor, welches weitgehendst aus Faserverbundwerkstoff hergestellt ist, mit einer im wesentlichen symmetrischen, abgeflachten Drillelement-Querschnittsform, welche annähernd die Umrissform eines liegenden, mittigen Doppelkegelschnitts besitzt, **dadurch gekennzeichnet, dass** die Drillelement-Querschnittsform durch zwei einander seitlich gegenüberliegende gleichartige Gruppen von Stegen (S1 bis S6) gebildet ist, wobei die Stege (S1 bis S6) einer jeweiligen gleichartigen Gruppe (S1 bis S3 und S4 bis S6) ausgehend von einem gemeinsamen dünnen Wurzelbereich (4), der einen Mittenabschnitt der Drillelement-Querschnittsform bildet und in den die Stege (S1 bis S6) beider Gruppen münden, durch schmale Zwischenspalte (6) voneinander getrennt übereinander angeordnet sind und die Dicke der jeweiligen Stege (S1 bis S6) zu den freien lateralen Seitenrändern des Drillelementes (2) hin zunimmt.

2. Drillelement (2) nach Anspruch1, **dadurch gekennzeichnet, dass** die Stege (S1 bis S6) jeweils eine keilförmige Querschnittsform besitzen, deren Spitze in den Wurzelbereich (4) mündet.

3. Drillelement (2) nach den Ansprüchen 1 und 2, **dadurch gekennzeichnet, dass** die Stege (S1 bis S6) zumindest im Bereich der lateralen Seiten der Drillelement-Querschnittsform unidirektionale Verstärkungsfaserpakete (8) aufweisen, deren Fasern in Längsrichtung (A) des Drillelementes (2) verlaufen.

4. Drillelement (2) nach einem oder mehreren der vorhergenannten Ansprüche, **dadurch gekennzeichnet, dass** sich die unidirektionalen Verstärkungsfaserpakete (8) bis zur Außenkontur des Drillelement-Querschnittes erstrecken.

5. Drillelement (2) nach einem oder mehreren der vorhergenannten Ansprüche, **dadurch gekennzeichnet, dass** die Fasern der unidirektionalen Verstärkungsfaserpakete (8) Kohlefasern sind.

6. Drillelement (2) nach einem oder mehreren der vorhergenannten Ansprüche, **dadurch gekennzeichnet, dass** die Stege (S1 bis S6) in Längsrichtung des Drillelementes (2) jeweils mindestens einmal geschlitzt (10) sind, wobei sich der jeweilige mindestens eine Schlitz (10) ausgehend von einem freien lateralen Seitenrand der Drillelement-Querschnittsform in Richtung zu dem Wurzelbereich (4) erstreckt.

7. Drillelement (2) nach einem oder mehreren der vorhergenannten Ansprüche, **dadurch gekennzeichnet, dass** die Schlitze (10) im wesentlichen geradlinig ausgebildet sind und sich die jeweiligen Schlitzlängsachsen oder deren Verlängerungen im Mittelpunkt (A) der Drillelement-Querschnittsform überkreuzen oder in unmittelbarer Nähe des Mittelpunktes (A) durch den Wurzelbereich (4) verlaufen.

8. Drillelement (2) nach einem oder mehreren der vorhergenannten Ansprüche, **dadurch gekennzeichnet, dass** der mindestens eine Schlitz (10) eines Steges (S1 bis S6) jeweils zwischen mindestens zwei benachbarten unidirektionalen Verstärkungsfaserpaketen (8) verläuft.

9. Drillelement (2) nach einem oder mehreren der vorhergenannten Ansprüche, **dadurch gekennzeichnet, dass** ein jeweiliger Steg (S1 bis S6) in unmittelbarer Nähe seines Schlitzes (10) mindestens eine Verstärkungsfasergewebelage (12) aufweist, die ausgehend von einer lateralen Schlitzöffnung U-förmig oder schlaufenförmig um einen Schlitzboden (10a) und die innerhalb des Steges (S1 bis S6) befindliche Schlitzkontur herum verläuft und sich zwischen zwei benachbarten unidirektionalen Verstärkungsfaserpaketen (8) befindet.

10. Drillelement (2) nach einem oder mehreren der vorhergenannten Ansprüche, **dadurch gekennzeichnet, dass** jeweils zwei Stege (S1, S6; S3, S4), die sich an der Ober- und Unterseite der Drillelement-Querschnittsform paarweise gegenüberliegen, mindestens eine Verstärkungsfaserlage (14) aufweisen, sich über die Breite des jeweils einen Steges (S1; S3) und über den Wurzelbereich (4) hinweg durchgehend zu dem jeweils anderen, gegenüberliegenden Steg (S6; S4) und über dessen Breite erstreckt.

11. Drillelement (2) nach einem oder mehreren der vorhergenannten Ansprüche, **dadurch gekennzeichnet, dass** die lateralen Seitenflächen der Stege (S1 bis S4) oberhalb und unterhalb einer horizontalen Mittelachse (H) des Drilleiement-Querschnitts zu einer vertikalen Mittelachse (V) des Drillelement-Querschnitts hin abgeschrägt (α) sind.

12. Drillelement (2) nach einem oder mehreren der vorhergenannten Ansprüche, **dadurch gekennzeichnet, dass** dieses integraler Bestandteil eines Rotorblattes, eines Rotorblatt-Verbindungselementes, eines Rotorblatt-Anschlusselementes oder eines Rotorkopfelementes ist.

13. Lagerloser Rotor, umfassend mindestens ein Drillelement (2) nach einem der Ansprüche 1 bis 12.

14. Drehflügelflugzeug, insbesondere Hubschrauber, umfassend mindestens einen lagerlosen Rotor mit mindestens einem Drillelement (2) nach einem der Ansprüche 1 bis 12.

## Claims

1. A twist element (2) for a bearingless rotor which is largely made of a composite fibre material, comprising a substantially symmetrical, flattened, twist element cross-sectional shape which has approximately the contour of a horizontal, central section of a double cone, **characterised in that** the twist element cross-sectional shape is formed by two similar, laterally opposing groups of webs (S1 to S6), wherein the webs (S1 to S6) of a respective similar group (S1 to S3 and S4 to S6), starting from a common thin root region (4), which forms a central portion of the twist element cross-sectional shape and in which the webs (S1 to S6) of the two groups end, are arranged so as to be separated from each other vertically by narrow gaps (6) and the thickness of the respective webs (S1 to S6) increases toward the free lateral side edges of the twist element (2).

2. A twist element (2) according to claim 1, **characterised in that** the webs (S1 to S6) each have a wedge-shaped cross-sectional shape, of which the tip ends in the root region (4).

3. A twist element (2) according to claims 1 and 2, **characterised in that** the webs (S1 to S6), at least in the region of the lateral sides of the twist element cross-sectional shape, have unidirectional reinforcing fibre packets (8), of which the fibres extend in the longitudinal direction (A) of the twist element (2).

4. A twist element (2) according to one or more of the preceding claims, **characterised in that** the unidirectional reinforcing fibre packets (8) extend up to the outer contour of the twist element cross-section.

5. A twist element (2) according to one or more of the preceding claims, **characterised in that** the fibres of the unidirectional reinforcing fibre packets (8) are carbon fibres.

6. A twist element (2) according to one or more of the preceding claims, **characterised in that** the webs (S1 to S6) are slit (10) at least once in each case in the longitudinal direction of the twist element (2), wherein the respective at least one slit (10), starting from a free lateral side edge of the twist element cross-sectional shape, extends in the direction toward the root region (4).

7. A twist element (2) according to one or more of the preceding claims, **characterised in that** the slit (10) is substantially rectilinear and the respective slit longitudinal axes or their extensions intersect at the centre point (A) of the twist element cross-sectional shape or extend through the root region (4) in the immediate vicinity of the centre point (A).

8. A twist element (2) according to one or more of the preceding claims, **characterised in that** the at least one slit (10) of a web (S1 to S6) in each case extends between at least two adjacent unidirectional reinforcing fibre packets (8).

9. A twist element (2) according to one or more of the preceding claims, **characterised in that** a respective web (S1 to S6), in the immediate vicinity of its slit (10), has at least one reinforcing fibre covering (12) which, starting from a lateral slit opening, extends in a U-shape or looped manner around a slit base (10a) and the slit contour situated inside the web (S1 to S6), and is situated between two adjacent, unidirectional reinforcing fibre packets (8).

10. A twist element (2) according to one or more of the preceding claims, **characterised in that** two webs (S1, S6; S3, S4) respectively, which oppose each other in pairs at the upper and lower side of the twist element cross-sectional shape, comprise at least one reinforcing fibre layer (14), extend over the width of the one respective web (S1; S3) and over the root region (4) and continuously to the other, opposing web (S6; S4) respectively, and over the width thereof.

11. A twist element (2) according to one or more of the preceding claims, **characterised in that** the lateral side faces of the webs (S1 to S4), above and below a horizontal centre line (H) of the twist element cross-sectional shape, are inclined (α) toward a vertical centre line (V) of the twist element cross-section.

12. A twist element (2) according to one or more of the preceding claims, **characterised in that** it is an integral component of a rotor blade, a rotor-blade connecting element, a rotor-blade joining element or a rotor head element.

13. Bearingless rotor, comprising at least one twist element (2) according to any one of claims 1 to 12.

14. Rotorcraft, in particular a helicopter, comprising at least one bearingless rotor with at least one twist element (2) according to any one of claims 1 to 12.

## Revendications

1. Elément de torsion (2) pour un rotor sans palier, fabriqué pour l'essentiel à partir d'un matériau composite en fibre, ayant une forme de section transversale aplatie, pour l'essentiel symétrique, dont la forme de contour est approximativement une double section de cône centrale, horizontale,
**caractérisé en ce que**
la forme de la section transversale de l'élément de torsion est composée par deux groupes de traverses (S1 à S6) de même type, opposés latéralement l'un à l'autre, les traverses (S1 à S6) d'un groupe respectif similaire (S1 à S3 et S4 à S6) étant disposées les unes au-dessus des autres et séparées par une fine fente intermédiaire (6) en partant d'une base mince (4), qui forme une section centrale de la forme de la section transversale de l'élément de torsion et dans laquelle débouchent les traverses (S1 à S6) des deux groupes, l'épaisseur des traverses respectives (S 1 à S6) augmentant vers les bords latéraux libres de l'élément de torsion (2).

2. Elément de torsion (2) selon la revendication 1,
**caractérisé en ce que**
les traverses (S1 à S6) ont chacune une forme de section transversale en éventail, dont la pointe débouche dans la base (4).

3. Elément de torsion (2) selon les revendications 1 et 2,
**caractérisé en ce que**
les traverses (S1 à S6), au moins dans la zone des côtés latéraux de la forme de la section transversale de l'élément de torsion, présentent des paquets de fibres de renfort unidirectionnels (8) dont les fibres s'étendent dans la direction longitudinale (A) de l'élément de torsion (2).

4. Elément de torsion (2) selon une ou plusieurs des revendications précédentes,
**caractérisé en ce que**
les paquets de fibres de renfort unidirectionnels (8) s'étendent jusqu'au contour extérieur de la section transversale de l'élément de torsion.

5. Elément de torsion (2) selon une ou plusieurs des revendications précédentes,
**caractérisé en ce que**
les fibres des paquets de renfort unidirectionnels (8) sont des fibres de carbone.

6. Elément de torsion (2) selon une ou plusieurs des revendications précédentes,
**caractérisé en ce que**
les traverses (S1 à S6) sont chacune fendue (10) au moins une fois (10) dans la direction longitudinale de l'élément de torsion (2), chaque fente (10) respective s'étendant à partir d'un bord latéral libre de la forme de section transversale de l'élément de torsion en direction de la base (4).

7. Elément de torsion (2) selon une ou plusieurs des revendications précédentes,
**caractérisé en ce que**
les fentes (10) sont pour l'essentiel rectilignes et les axes longitudinaux respectifs des fentes ou leurs prolongements se croisent au niveau du point central (A) de la forme de la section transversale de l'élément de torsion ou s'étendent à proximité immédiate du point central (A) à travers la base (4).

8. Elément de torsion (2) selon une ou plusieurs des revendications précédentes,
**caractérisé en ce qu'**
une fente (10) d'une traverse (S1 à S6) s'étend respectivement entre au moins deux paquets de fibres de renfort unidirectionnels adjacents (8).

9. Elément de torsion (2) selon une ou plusieurs des revendications précédentes,
**caractérisé en ce qu'**
chaque traverse (S1 à S6) présente, à proximité immédiate de sa fente (10), au moins une couche de tissu de fibres de renfort (12) qui s'étend en forme de U à partir d'une ouverture latérale de la fente ou en forme de boucle autour d'un fond de la fente (10a) et du contour de fente présent à l'intérieur de la traverse (S 1 à S6) et se trouve entre deux paquets de fibres de renfort unidirectionnels adjacents (8).

10. Elément de torsion (2) selon une ou plusieurs des revendications précédentes,
**caractérisé en ce que**
deux traverses (S1, S6 ; S3, S4) respectivement opposées par paires au niveau de la face supérieure et inférieure de la forme de la section transversale de l'élément de torsion présentent au moins une couche de fibres de renfort (14) qui s'étend sur la largeur de la traverse (S1 ; S3) respective, à travers la base (4), vers l'autre traverse opposée respective (S6 ; S4), sur toute la largeur de celle-ci.

11. Elément de torsion (2) selon l'une ou plusieurs des revendications précédentes,
**caractérisé en ce que**
les surfaces latérales des traverses (S 1 à S4) sont inclinées d'un angle (α), au-dessus et en dessous d'un axe médian horizontal (H) de la section transversale de l'élément de torsion, par rapport à un axe médian vertical (V) de la section transversale de l'élément de torsion.

12. Elément de torsion (2) selon une ou plusieurs des revendications précédentes,
**caractérisé en ce que**
celui-ci est un composant intégral d'une pale de rotor, d'un élément de liaison de pales de rotor, d'un élément de raccordement de pales de rotor ou d'un élément de tête de rotor.

13. Rotor sans palier, comprenant au moins un élément de torsion (2) selon une des revendications 1 à 12.

14. Aéronef à voilure tournante, en particulier hélicoptère, comprenant au moins un rotor sans palier doté d'au moins un élément de torsion (2) selon l'une des revendications 1 à 12.
